# EUROPEAN PATENT APPLICATION

(11) **EP 4 261 040 A1**
(43) Date of publication of application: **18.10.2023**
(21) Application number: 21903205.9
(22) Date of filing: 26.11.2021
(51) Int. Cl.: B32B 27/18, B32B 27/30, B32B 27/32, B32B 27/36, B32B 27/40, B65D 65/40, C09J 11/06, C09D 201/02, C09J 201/02, C09D 11/10, C09D 7/63, C09J 7/35

(54) **LAMINATE, AND PACKAGING BODY OR CONTAINER**

(30) Priority: 11.12.2020 JP 2020206146
(71) Applicant: National Institute for Materials Science, Tsukuba-shi, Ibaraki 305-0047 (JP); DIC Corporation, Tokyo 174-8520 (JP)
(72) Inventor: NAITO Masanobu, Tsukuba-shi, Ibaraki 305-0047 (JP); OHARA Shin-ichi, Tokyo 174-8520 (JP); TAMAOKA Takashi, Tokyo 174-8520 (JP); IWANAMI Hideoki, Tokyo 174-8520 (JP)
(74) Representative: Beckmann, Claus
(86) International application number: PCT/JP2021/043433
(87) International publication number: WO 2022/124101

(57) **Abstract**

A laminate (10) includes a substrate (11), a sealing layer (12A) disposed on a surface of the substrate (11), and a coating layer (13) disposed on a surface of the substrate (11) opposite to the sealing layer (12A). The coating layer (13) contains a tannic acid derivative in which at least a part of a plurality of hydroxyl groups is substituted with a linear hydrocarbon group having 1 to 18 carbon atoms, and at least one type of resin selected from the group consisting of a urethane resin, an acrylic resin, a vinyl chloride-vinyl acetate copolymer resin, a polyester resin, and an olefin resin.

## Description

### Technical Field

The present invention relates to a laminate, and a packaging body or a container including the laminate.

The present application claims priority based on Japanese Patent Application No. 2020-206146, filed December 11, 2020, the content of which is incorporated herein by reference.

### Background Art

Conventionally, in the fields of food packaging and pharmaceutical packaging, a technique for keeping the safety of contents by a process including a bactericidal process for infection by bacteria such as E. coli, such as retort sterilization, and sterile filling has been investigated and put in practical use. In recent years, the recognition of sanitation expands to consumers with spread of infection, and safety is required for a packaging material. As an antibacterial or antiviral substance, an inorganic compound, silver, copper, and the like are known, but the substance still has room for improvement in cost and use application of a packaging material that comes into direct contact with a food product from the viewpoint of the safety of the food product.

A tannin that is a type of polyphenol has been already used as a rust inhibitor. For example, it is known that the tannin forms a stable coating on a zinc surface. The tannin is hardly dissolved in an organic solvent, and the use application of the tannin is restricted. However, when at least a part of hydroxyl groups contained in a tannin molecule is substituted with an alkyl ether or an alkyl ester to obtain a water-insoluble tannic acid derivative, the use application can be expanded (PTL 1).

The aforementioned coating is a coating in which a film formed by aggregation polymerization or association polymerization of tannic acid is disposed on a film formed by a reaction of zinc with gallic acid and the like in tannic acid (NPL 1). A hydroxyl group in gallic acid and the like contained in tannic acid is involved in the reactions. Therefore, when the hydroxyl group is converted to an alkyl ether or the like, it is difficult to form the coating, and a rust-inhibiting effect may be decreased. In PTL 1, a tannin in a solution form is substantially evaluated.

A coating-forming composition containing a tannic acid derivative in which a hydrogen atom in at least a part of hydroxyl groups in tannic acid is substituted with a linear hydrocarbon group having 3 to 18 carbon atoms has been proposed (for example, PTL 2). This coating-forming composition has film formation properties and can form a stable film on various substrates. This is considered because molecules of the tannic acid derivative are disposed such that linear hydrocarbon groups are arranged, resulting in well-ordered orientation. This orientation compensates for a decrease in hydroxyl group to excessively stabilize the film. As a result, more excellent rust prevention, antibacterial properties, bactericidal properties, and the like than an aggregation film of tannic acid are provided.

### Citation List

### Patent Literature

PTL 1: Japanese Unexamined Patent Application No. 2004-307362
PTL 2: International Publication WO2016/076311

### Non Patent Literature

NPL 1: Journal of the Surface Finishing Society of Japan, Vol. 29, No. 1, pp. 38 to 42 and FIG. 10, 1978

### Summary of Invention

### Technical Problem

However, the conventional coating-forming composition containing the tannic acid derivative does not have sufficient reliability of antibacterial properties and still has room for improvement in use application of a packaging material that comes into direct contact with a food product, a medical product, or the like although it allows for cost reduction. In particular, a packaging material has a sealing layer for attachment to a container or attachment to another packaging material. When the sealing layer is in direct contact with a content, it is necessary to prevent contamination of the content due to elution of an antibacterial substance contained in the sealing layer, and the like. In recent years, a food packaging material is used in wide use application with variation of lifestyle and necessity for preserved foods during emergency. Therefore, a food packaging material providing sufficient rust prevention, antibacterial properties, and bactericidal properties in a variety of use application is required.

An object of the present invention is to provide a laminate, and a packaging body or container that can provide sufficient antibacterial properties, sterilizing properties, and bactericidal properties to achieve high reliability.

### Solution to Problem

In order to achieve the object, the present inventors have intensively studied, and as a result found that when a coating layer disposed on both surfaces of a substrate contains a tannic acid derivative in which at least a part of a plurality of hydroxyl groups is substituted with a linear hydrocarbon group having 1 to 18 carbon atoms, and at least one type of resin selected from the group consisting of a urethane resin, an acrylic resin, a vinyl chloride-vinyl acetate copolymer resin, a polyester resin, and an olefin resin, the tannic acid derivative can be stably held inside the resin forming the coating layer or on a surface of the resin, and sufficient antibacterial properties, sterilizing properties, and bactericidal properties can be provided to achieve high reliability.

Specifically, the present invention provides the following configurations.
[1] A laminate including:
   a substrate,
   a sealing layer disposed on a surface of the substrate, and
   a coating layer disposed on a surface of the substrate opposite to the sealing layer, in which
   the coating layer contains
      a tannic acid derivative in which at least a part of a plurality of hydroxyl groups is substituted with a linear hydrocarbon group having 1 to 18 carbon atoms, and
   at least one type of resin selected from the group consisting of a urethane resin, an acrylic resin, a vinyl chloride-vinyl acetate copolymer resin, a polyester resin, and an olefin resin.
[2] The laminate according to [1], in which the coating layer is formed of an organic binder containing the tannic acid derivative and the resin.
[3] The laminate according to [1] or [2], in which the coating layer constitutes a decorative layer.
[4] The laminate according to [3], in which the decorative layer is formed of a printing layer containing a printing ink.
[5] The laminate according to [1], in which the coating layer is a layer coated with a sealing coating agent.
[6] The laminate according to [1], in which the sealing layer contains a tannic acid derivative in which at least a part of a plurality of hydroxyl groups is substituted with a linear hydrocarbon group having 1 to 18 carbon atoms.
[7] The laminate according to [6], in which the sealing layer is formed of an organic binder containing the tannic acid derivative and the resin.
[8] A packaging body or container including: a container body, and one or more laminates according to any one of [1] to [7] attached to the container body.
[9] The packaging body or container according to [8], in which the laminates constitute a lid member of the container body.
[10] The packaging body or container according to [8], in which the laminates are attached to an outer surface of the container body.
[11] A packaging body or container including: an outer package formed by bonding one or more laminates according to any one of [1] to [7], and a compartment disposed inside the outer package.

### Advantageous Effects of Invention

According to the present invention, sufficient antibacterial properties, sterilizing properties, and bactericidal properties can be provided to achieve high reliability.

### Brief Description of Drawings

FIG. 1 is a view of a chemical reaction process illustrating an example of derivatization of tannic acid.
FIG. 2A is a cross-sectional view illustrating an example of a specific configuration of a laminate according to an embodiment of the present invention.
FIG. 2B is a cross-sectional view illustrating an example of another specific configuration of the laminate according to the embodiment.
FIG. 3A is a cross-sectional view illustrating an example of a specific configuration of a packaging body with the laminate according to the embodiment.
FIG. 3B is a perspective view illustrating an example of a specific configuration of a container with the laminate according to the embodiment.
FIG. 4 is a perspective view illustrating still another example of the specific configuration of the packaging body with the laminate according to the embodiment.
FIG. 5A is a perspective view illustrating still another example of the specific configuration of the packaging body with the laminate according to the embodiment.
FIG. 5B is a cross-sectional view taken along line I-I in FIG. 5A.
FIG. 6 is a perspective view illustrating still another example of the specific configuration of the container with the laminate according to the embodiment.

### Description of Embodiments

Hereinafter, embodiments of the present invention will be described in detail with reference to the drawings. The present invention is not limited to the following embodiments.

### <Laminate>

A laminate according to an embodiment includes a substrate, a sealing layer disposed on a surface of the substrate, and a coating layer disposed on a surface of the substrate opposite to the sealing layer. The coating layer contains a tannic acid derivative in which at least a part of a plurality of hydroxyl groups is substituted with a linear hydrocarbon group having 1 to 18 carbon atoms, and at least one type of resin selected from the group consisting of a urethane resin, an acrylic resin, a vinyl chloride-vinyl acetate copolymer resin, a polyester resin, and an olefin resin.

### [Coating Layer]

For example, the coating layer is a layer coated with a coating agent containing an organic solvent or the like as a solvent. The coating agent contains a tannic acid derivative in which at least a part of a plurality of hydroxyl groups is substituted with a linear hydrocarbon group having 1 to 18 carbon atoms.

### (Tannic Acid Derivative)

A tannin is a generic term of plant components that generate polyhydric phenols under hydrolysis. The tannin is broadly classified into a hydrolyzable tannin in which gallic acid or ellagic acid is bonded to a saccharide such as glucose via an ester bond and that is likely to be hydrolyzed by an acid or enzyme, and a condensed tannin in which a compound having a flavanol skeleton is polymerized. It is considered that either the hydrolyzable tannin or the condensed tannin or a mixture thereof allows for derivatization in the disclosure and exerts the effects of the present disclosure. The hydrolyzable tannin is preferred. For example, a tannin containing as a main component tannic acid represented by the following formula (1) is derivatized.

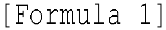

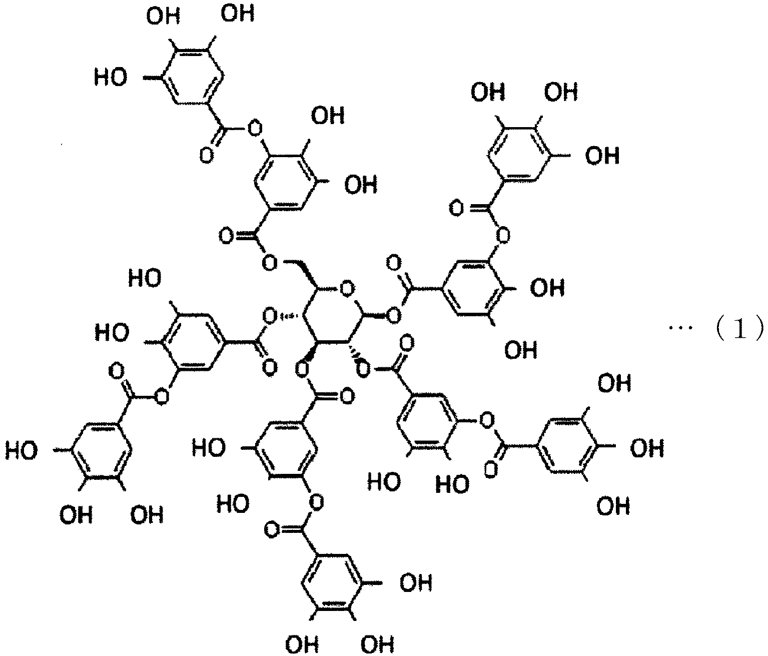

Tannic acid has a plurality of hydroxyl groups. In a derivative in the present disclosure, a hydrogen atom in at least a part of the hydroxyl groups is substituted with a linear hydrocarbon group having 1 to 18 carbon atoms. The total number of hydroxyl groups in tannic acid as a raw material varies according to the type thereof. Substitution is performed preferably at 10% or more, more preferably at 20% or more, and particularly preferably at 40% or more of the number of substituents. For example, in a case of the formula (1), the total number of hydroxyl groups is 25, and at least one hydroxyl group, preferably three or more hydroxyl groups, more preferably five or more hydroxyl groups, and particularly preferably ten or more hydroxyl groups are substituted.

The upper limit of the number of substituents varies according to the types of the substituents, the used substrate, and use purpose. If desired fixation to the used substrate is achieved, all the hydroxyl groups may be substituted. When the used substrate is a polar substrate of metal, glass, or the like, substitution is performed preferably at 80% or less, and more preferably at 60% or less of the number of substituents. For example, in a case of the formula (1), the number of hydroxyl groups to be substituted is preferably 20 or less, and more preferably 15 or less.

Examples of the linear hydrocarbon group having 1 to 18 carbon atoms include a linear or branched alkyl group, alkenyl group, and alkynyl group. The linear hydrocarbon group is bonded to a tannic acid skeleton via a bond containing an oxygen atom derived from a hydroxyl group. Specific examples of the linear hydrocarbon group include a butyl group, a hexyl group, a heptyl group, an octyl group, an isooctyl group, a nonyl group, an isononyl group, a decyl group, an undecyl group, a dodecyl group, a hexadecyl group, a propylene group, a hexylene group, a hexadecenyl group, and an octadecenyl group. The number of carbon atoms in the linear hydrocarbon group is preferably 3 to 18, more preferably 4 to 18, and further preferably 6 to 16. Examples of the bond containing an oxygen atom include an ether bond, an ester bond, and a urethane bond.

### (Method for Producing Tannic Acid Derivative)

The tannic acid derivative is obtained by Williamson ether synthesis, which is one alkylation reaction. Specifically, the tannic acid derivative can be obtained by a reaction of alkyl halide with tannic acid in the presence of a basic catalyst in a solvent such as tetrahydrofuran or dimethyl sulfoxide. As the basic catalyst, any one or two or more catalysts selected from the group consisting of MH, M₂CO₃, and M (M: alkaline metal) can be used. For example, K₂CO₃ can convert an OH group to O⁻M⁺ and facilitate a nucleophilic reaction of alkyl halide (X-R1: X: halogen, R1: alkyl group) with an O- group. As the alkyl halide, for example, alkyl iodide can be used. Instead of the alkyl halide, a compound having a sulfonyl group or the like as a leaving group can also be used. An alkylation reaction other than Williamson ether synthesis can also be adopted. Further, a dehydration-condensation reaction of carboxylic acid using a condensation agent, such as N,N'-dicyclohexylcarbodiimide (DCC), or a condensation reaction of isocyanate can also be adopted.

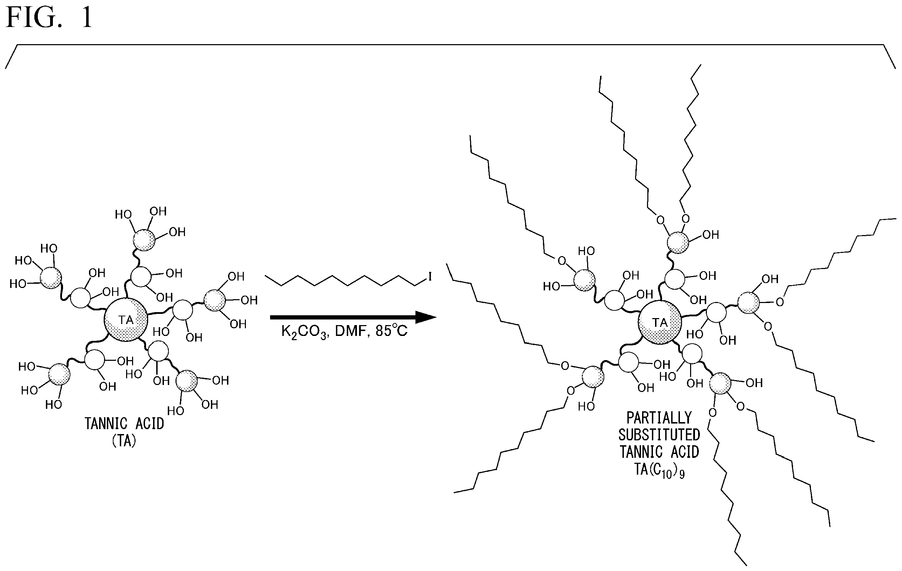

The reaction is performed under heating at 70°C or higher and 100°C or lower for about one hour. FIG. 1 illustrates an example of derivatization of tannic acid represented by the formula (1). An example in which the tannic acid and the alkyl halide are heated at 85°C using K₂CO₃ as the basic catalyst in DMF to synthesize a derivative (TA(C₁₀)₉) having nine decyl groups is shown. By changing the molar ratio of the alkyl halide to the tannic acid, the number n of alkyl groups introduced into tannic acid can be set to be a desired value.

(At Least One Type of Resin Selected from Group Consisting of Urethane Resin, Acrylic Resin, Vinyl Chloride-Vinyl Acetate Copolymer Resin, Polyester Resin, and Olefin Resin)

The resin contained in the coating layer is suitably used as a binder for the coating agent that contains an organic solvent or the like as a medium and is used for paper or film.

### (A) Urethane Resin

The urethane resin is not particularly limited as long as it is a polyurethane resin obtained by a reaction of a polyol with a polyisocyanate. As the polyol, for example, a variety of publicly known polyols generally used in production of a polyurethane resin can be used. One type of polyol may be used, or two or more types thereof may be used in combination. Examples thereof include (1) saturated or unsaturated low molecular weight polyols, such as ethylene glycol, 1,2-propanediol, 1,3-propanediol, 2-methyl-1,3-propanediol, 2-ethyl-2-butyl-1,3-propanediol, 1,3-butanediol, 1,4-butanediol, neopentyl glycol, pentanediol, 3-methyl-1,5-pentanediol, hexanediol, octanediol, 1,4-butynediol, 1,4-butylenediol, diethylene glycol, triethylene glycol, dipropylene glycol, glycerol, trimethylolpropane, trimethylolethane, 1,2,6-hexanetriol, 1,2,4-butanetriol, sorbitol, and pentaerythritol; (2) polyesterpolyols obtained by dehydration condensation or polymerization of the low molecular weight polyols (1) with polyhydric carboxylic acids, such as sebacic acid, adipic acid, phthalic acid, isophthalic acid, terephthalic acid, maleic acid, fumaric acid, succinic acid, oxalic acid, malonic acid, glutaric acid, pimelic acid, suberic acid, azelaic acid, trimellitic acid, and pyromellitic acid, or anhydrides thereof; (3) polyesterpolyols obtained by ring-opening polymerization of cyclic ester compounds, for example, lactones, such as a polycaprolactone, a polyvalerolactone, and a poly(β-methyl-γ-valerolactone); (4) polycarbonate polyols obtained by a reaction of the low molecular weight polyols with, for example, dimethyl carbonate, diphenyl carbonate, ethylene carbonate, or phosgene; (5) polybutadiene glycols; (6) glycols obtained by adding ethylene oxide or propylene oxide to bisphenol A; and (7) acrylic polyols obtained by copolymerization of one or more hydroxyethyls, hydroxypropyl acrylates, hydroxybutyl acrylates, or corresponding methacrylic acid derivatives in one molecule with, for example, acrylic acid, methacrylic acid, or an ester thereof.

Examples of the polyisocyanate include a variety of publicly known aromatic diisocyanates, aliphatic diisocyanates, and alicyclic diisocyanates generally used in production of polyurethane resin. For example, an aromatic polyisocyanate, such as 1,3-phenylene diisocyanate, 1,4-phenylene diisocyanate, 1-methyl-2,4-phenylene diisocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, naphthalene-1,5-diisocyanate, 1-mehyl-naphthalene-1,5-diisocyanate, naphthalene-2,6-diisocyanate, naphthalene-2,7-diisocyanate, 1,1-dinaphtyl-2,2'-diisocyanate, biphenyl-2,4'-diisocyanate, biphenyl-4,4'-diisocyanate, 3,3'-dimethylbiphenyl-4,4'-diisocyanate, 4,4'-diphenylmethane diisocyanate, 2,2'-diphenylmethane diisocyanate, or diphenylmethane-2,4-diisocyanate; an aliphatic or alicyclic polyisocyanate, such as tetramethylene diisocyanate, hexamethylene diisocyanate, dodecamethylene diisocyanate, trimethylhexamethylene diisocyanate, 1,3-cyclopentylene diisocyanate, 1,3-cyclohexylene diisocyanate, 1,4-cyclohexylene diisocyanate, 1,3-di(isocyanatomethyl)cyclohexane, 1,4-di(isocyanatomethyl)cyclohexane, lysine diisocyanate, isophorone diisocyanate, 4,4'-dicyclohexylmethane diisocyanate, 2,4'-dicyclohexylmethane diisocyanate, 2,2'-dicyclohexylmethane diisocyanate, or 3,3'-dimethyl-4,4'-dicyclohexylmethane diisocyanate, or the like can be used. The polyisocyanates may be used alone, or two or more types thereof may be used in combination. Among these, the diisocyanate compounds can be used alone, or a mixture of two or more types thereof can be used.

A chain-elongating agent can be used. As the chain-elongating agent, for example, an amine having a hydroxyl group in the molecule, such as ethylenediamine, propylenediamine, hexamethylenediamine, diethylenetriamine, triethylenetetramine, isophoronediamine, dicyclohexymethane-4,4'-diamine, or the like, 2-hydroxyethylethylenediamine, 2-hydroxyethylpropyldiamine, 2-hydroxyethylpropylenediamine, di-2-hydroxyethylethylenediamine, di-2-hydroxyethylenediamine, di-2-hydroxyethylpropylenediamine, 2-hydroxypropylethyenediamine, di-2-hydroxypropylethyenediamine, or di-2-hydroxypropylethyenediamine can be used. The chain-elongating agents can be used alone, a mixture of two or more types thereof can be used.

As a terminal blocking agent for termination of the reaction, a monovalent active hydrogen compound can also be used. Examples of the compound include dialkylamines, such as di-n-butylamine, and alcohols, such as ethanol and isopropyl alcohol. In order to particularly introduce a carboxyl group into a polyurethane resin, an amino acid, such as glycine or L-alanine, can be used as a reaction terminator. The terminal blocking agents can be used alone, a mixture of two or more types thereof can be used.

The weight average molecular weight of the urethane resin is preferably 10,000 to 100,000, and more preferably 15,000 to 80,000.

### (B) Acrylic Resin

The acrylic resin is not particularly limited as long as it is a copolymer of a polymerizable monomer containing as a main component a (meth)acrylic acid ester. Examples of the polymerizable monomer include methyl (meth)acrylate, ethyl (meth)acrylate, propyl (meth)acrylate, n-butyl (meth)acrylate, iso-butyl (meth)acrylate, 2-ethylhexyl (meth)acrylate, n-octyl (meth)acrylate, iso-octyl (meth)acrylate, lauryl (meth)acrylate, stearyl (meth)acrylate, iso-nonyl (meth)acrylate, cyclohexyl (meth)acrylate, benzyl (meth)acrylate, methoxyethyl (meth)acrylate, ethoxyethyl (meth)acrylate, and phenoxyethyl (meth)acrylate. A polymerization method is not particularly limited. The acrylic resin obtained by publicly known bulk polymerization, solution polymerization, emulsion polymerization, suspension polymerization, or the like can be used.

The weight average molecular weight of the acrylic resin is preferably 5,000 to 200,000, and more preferably 10,000 to 100,000.

### (C) Vinyl Chloride-Vinyl Acetate Copolymer Resin

The vinyl chloride-vinyl acetate copolymer resin is not particularly limited as long as it is a copolymer of vinyl chloride and vinyl acetate. The weight-average molecular weight as the molecular weight is preferably 5,000 to 100,000, and further preferably 10,000 to 70,000. It is preferable that 100% by mass of solid content of the vinyl chloride-vinyl acetate copolymer resin contain 1 to 30% by mass of structure derived from a vinyl acetate monomer and 70 to 95% by mass of structure derived from a vinyl chloride monomer. In this case, the solubility in an organic solvent is enhanced, and adherence to the substrate, coating physical properties, scratch resistance, and the like are further improved.

From the viewpoint of the solubility in an organic solvent, the vinyl chloride-vinyl acetate copolymer resin containing a hydroxyl group derived from a vinyl alcohol structure is preferred. The hydroxyl value is preferably 20 mgKOH/g to 200 mgKOH/g. The glass transition temperature is preferably 50°C to 90°C.

### (D) Polyester Resin

The polyester resin is not particularly limited as long as it is a polyester resin obtained by a publicly known esterification polymerization reaction of an alcohol with a carboxylic acid.

Examples of the alcohol include ethylene glycol, 1,2-propanediol, 1,3-propanediol, 2-methyl-1,3-propanediol, 2-ethyl-2-butyl-1,3-propanediol, 1,3-butanediol, 1,4-butanediol, neopentyl glycol, 1,5-pentanediol, 1,2-pentanediol, 3-methyl-1,5-pentanediol, hexanediol, octanediol, 1,4-butynediol, 1,4-butylenediol, diethylene glycol, triethylene glycol, dipropylene glycol, glycerol, trimethylolpropane, trimethylolethane, 1,2,6-hexanetriol, 1,2,4-butanetriol, sorbitol, pentaerythritol, 1,4-cyclohexanediol, 1,2-cyclohexanediol, 1,4-cyclohexanedimethanol, 1,2-cyclohexanedimethanol, spiroglycol, and isosorbide. The alcohols can be used alone, a mixture of two or more types thereof can be used. Among these, a multifunctional alcohol is preferred.

Examples of the carboxylic acid include formic acid, acetic acid, propionic acid, butanoic acid, pentanoic acid, hexanoic acid, heptanoic acid, hexanoic acid, heptanoic acid, octanoic acid, nonanoic acid, decanoic acid, oleic acid, linoleic acid, oxalic acid, malonic acid, succinic acid, glutaric acid, adipic acid, pimelic acid, suberic acid, azelaic acid, sebacic acid, phthalic acid, and 1,4-cyclohexanedicarboxylic acid. The carboxylic acids can be used alone, a mixture of two or more types thereof can be used. Among these, a multifunctional carboxylic acid is preferred.

The weight average molecular weight of the polyester resin is preferably 500 to 6,000, and more preferably 1,400 to 5,500.

### (E) Olefin Resin

Examples of the olefin resin include polymers having a hydrocarbon skeleton as a main skeleton, such as a homopolymer or copolymer of an olefinic monomer, a copolymer of an olefinic monomer with another monomer, a hydrogenated product or halogenated product of the polymer, a modified product obtained by introduction of a functional group, such as an acid group or a hydroxyl group. One type of the olefin resin can be used, or two or more types thereof can be used in combination. A crystalline olefin resin having an acid group or an acid anhydride group, or a crystalline olefin resin having a hydroxyl group is preferably used.

Examples of the olefin resin having an acid group or an acid anhydride group include an acid-modified olefin resin (E-1) that is a copolymer of an olefinic monomer with an ethylenically unsaturated carboxylic acid or an ethylenically unsaturated carboxylic anhydride, and an acid-modified olefin resin (E-2) that is a resin obtained by graft modification of a polyolefin with an ethylenically unsaturated carboxylic acid or an ethylenically unsaturated carboxylic anhydride.

Examples of the olefinic monomer used in preparation of the acid-modified olefin resin (E-1) include an olefin having 2 to 8 carbon atoms, for example, ethylene, propylene, isobutylene, 1-butene, 4-methyl-1-pentene, hexene, and vinylcyclohexane. Among these, an olefin having 3 to 8 carbon atoms is preferred, and propylene and 1-butene are more preferred since adhesion strength is particularly favorable. In particular, combination use of propylene with 1-butene is preferred since resistance to a solvent is excellent and adhesion strength is excellent.

Examples of the ethylenically unsaturated carboxylic acid or the ethylenically unsaturated carboxylic anhydride used in copolymerization with the olefinic monomer include acrylic acid, methacrylic acid, maleic acid, itaconic acid, citraconic acid, mesaconic acid, maleic anhydride, 4-methylcyclohex-4-ene-1,2-dicarboxylic anhydride, bicyclo[2.2.2]oct-5-ene-2,3-dicarboxylic anhydride, 1,2,3,4,5,8,9,10-octahydronaphthalene-2,3-dicarboxylic anhydride, 2-octa-1,3-diketospiro[4.4]non-7-ene, bicyclo[2.2.1]hept-5-ene-2,3-dicarboxylic anhydride, maleopimaric acid, tetrahydrophthalic anhydride, methyl-bicyclo[2.2.1]hept-5-ene-2,3-dicarboxylic anhydride, methyl-norborn-5-ene-2,3-dicarboxylic anhydride, and norborn-5-ene-2,3-dicarboxylic anhydride. Among these, maleic anhydride is preferred since reactivity with the olefinic monomer and reactivity with an acid anhydride after copolymerization are particularly excellent, the molecular weight of the compound is small, and the concentration of functional group in the copolymer is high. The ethylenically unsaturated carboxylic acids or the ethylenically unsaturated carboxylic anhydrides can be used alone, or two or more types thereof can be used in combination.

In preparation of the acid-modified olefin resin (E-1), in addition to the olefinic monomer and the ethylenically unsaturated carboxylic acid or the ethylenically unsaturated carboxylic anhydride, another compound having an ethylenically unsaturated group, for example, styrene, butadiene, or isoprene may be used in combination.

Examples of the polyolefin used in preparation of the acid-modified olefin resin (E-2) include a homopolymer or copolymer of an olefin having 2 to 8 carbon atoms, and a copolymer of an olefin having 2 to 8 carbon atoms with another monomer. Specific examples thereof include polyethylenes, such as a high-density polyethylene (HDPE), a low-density polyethylene (LDPE), and a linear low-density polyethylene resin, α-olefin copolymers, such as a polypropylene, a polyisobutylene, a poly(1-butene), a poly(4-methyl-1-pentene), a polyvinylcyclohexane, an ethylene-propylene block copolymer, an ethylene-propylene random copolymer, an ethylene-1-butene copolymer, an ethylene-4-methyl-1-pentene copolymer, and an ethylene-hexene copolymer, an ethylene-vinyl acetate copolymer, an ethylene-methyl methacrylate copolymer, an ethylene-vinyl acetate-methyl methacrylate copolymer, and a propylene-1-butene copolymer. Among these, a homopolymer of olefin having 3 to 8 carbon atoms and a copolymer of two or more types of olefins having 3 to 8 carbon atoms are preferred, and a homopolymer of propylene and a propylene-1-butene copolymer are more preferred since adhesion strength is particularly favorable. In particular, a propylene-1-butene copolymer is preferred since resistance to a solvent is excellent and adhesion strength is excellent.

As the ethylenically unsaturated carboxylic acid or the ethylenically unsaturated carboxylic anhydride used in graft modification with the polyolefin, those used in copolymerization with the olefinic monomer in preparation of the acid-modified olefin resin (E-1) can be used. Maleic anhydride is preferred since reactivity of the functional group after graft modification is high and the concentration of functional group in a graft-modified polyolefin is high. The ethylenically unsaturated carboxylic acids or the ethylenically unsaturated carboxylic anhydrides can be used alone, or two or more types thereof can be used in combination.

Specific examples of a reaction by graft modification of a polyolefin with the ethylenically unsaturated carboxylic acid or the ethylenically unsaturated carboxylic anhydride include a method in which a polyolefin is melted and the ethylenically unsaturated carboxylic acid or the ethylenically unsaturated carboxylic anhydride (graft monomer) is added to the polyolefin resulting in a grafting reaction, a method in which a polyolefin is dissolved in a solvent to obtain a solution and the ethylenically unsaturated carboxylic acid or the ethylenically unsaturated carboxylic anhydride is added to the solution resulting in a grafting reaction, and a method in which a polyolefin dissolved in an organic solvent and the ethylenically unsaturated carboxylic acid or the ethylenically unsaturated carboxylic anhydride are mixed and heated at a temperature that is equal to or higher than the softening temperature or melting point of the polyolefin, and radical polymerization and hydrogen-abstracting reaction are simultaneously performed in a melted state.

For efficient graft copolymerization of the graft monomer in all the methods, it is preferable that the grafting reaction be performed in the presence of a radical initiator. The grafting reaction is usually performed under a condition of 60 to 350°C. The proportion of the radical initiator used is usually within the range of 0.001 to 1 parts by weight relative to 100 parts by weight of polyolefin before the modification.

The radical initiator is preferably an organic peroxide. Examples thereof include benzoyl peroxide, dichlorobenzoyl peroxide, dicumyl peroxide, di-tert-butyl peroxide, 2,5-dimethyl-2,5-di(peroxidebenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate, and tert-butyl perdiethylacetate. In addition, an azo compound, for example, azobisisobutyronitrile, dimethyl azoisobutylate, or the like can be used.

The radical initiator that is more suitable for a process of the grafting reaction may be selected. In general, dialkyl peroxide, such as dicumyl peroxide, di-tert-butyl peroxide, 2,5-dimethyl-2,5-di(tert-butylperoxy)hexyne-3, 2,5-dimethyl-2,5-di(tert-butylperoxy)hexane, or 1,4-bis(tert-butylperoxyisopropyl)benzene, is preferably used.

When as the olefin resin (E), the acid-modified olefin resin (E-1) or the acid-modified olefin resin (E-2) is used, it is preferable that the acid-modified olefin resin having an acid value of 1 to 200 mgKOH/g be used. This is because the adherence to a metal layer is further enhanced and electrolyte is excellent.

Examples of an olefin resin (E-3) having a hydroxyl group include a copolymer of a polyolefin with a hydroxyl group-containing (meth)acrylic acid ester or a hydroxyl group-containing vinyl ether, and a resin obtained by graft modification of a polyolefin with a hydroxyl group-containing (meth)acrylic acid ester or a hydroxyl group-containing vinyl ether. As the polyolefin, those used in preparation of the olefin resin (E-2) can be used. As a modification method, the same method as in the method for preparation the acid-modified olefin resin (E-1) or (E-2) can be used.

Examples of the hydroxyl group-containing (meth)acrylic acid ester used in modification include hydroxyethyl (meth)acrylate, hydroxypropyl (meth)acrylate, glycerol (meth)acrylate, lactone-modified hydroxyethyl (meth)acrylate, polyethylene glycol mono(meth)acrylate, and polypropylene glycol mono(meth)acrylate.

Examples of the hydroxyl group-containing vinyl ether include 2-hydroxyethyl vinyl ether, diethylene glycol monovinyl ether, and 4-hydroxybutyl vinyl ether.

When as the olefin resin (E), the olefin resin having a hydroxyl group (E-3) is used, it is preferable that the acid-modified olefin resin having an acid value of 1 to 200 mgKOH/g be used. This is because the adherence to a metal layer is further enhanced and electrolyte is excellent.

As the olefin resin (E), a polyolefin used in preparation of the acid-modified olefin resin (E-2) or the olefin resin (E-3) having a hydroxyl group may be used as it is without modification.

In order to achieve favorable adhesive properties, the weight average molecular weight of the olefin resin (E) is preferably 40,000 or more. In order to achieve appropriate flowability, the weight average molecular weight of the olefin resin (E) is preferably 150,000 or less.

### (Curing Agent)

When the resin used in the present disclosure has a reactive group such as a hydroxyl group, a carboxyl group, an amino group, and an epoxy group, a curing agent that can be reacted with the reactive group can be used in combination. For example, an isocyanate-based curing agent, an epoxy-based curing agent, an amino-based curing agent, or the like, can be used.

It is preferable that the coating layer be formed of an organic binder containing the tannic acid derivative and the resin. The organic binder preferably contains the tannic acid derivative and the specific resin. The organic binder means one that does not contain or does not substantially contain an inorganic substance such as a metal and an inorganic compound.

The content ratio of the tannic acid derivative in the coating layer is preferably 0.1% by mass or more and 50% by mass or less, and more preferably 0.5% by mass or more and 20% by mass or less.

The content ratio of the at least one type of resin selected from the group consisting of a urethane resin, an acrylic resin, a vinyl chloride-vinyl acetate copolymer resin, a polyester resin, and an olefin resin is preferably 50% by mass or more and 99.9% by mass or less, and more preferably 80% by mass or more and 99.5% by mass or less.

The mass ratio of the tannic acid derivative to the resin contained in the coating layer is preferably 0.1:99.9 to 50:50, and more preferably 0.5:99.5 to 20:80.

The coating layer may be a layer coated with a coating agent with sealing properties that contains an organic solvent, water, or the like as a medium. Thus, the coating layer having sealing properties in addition to antibacterial properties can be provided. When the coating layer is placed at a position where the coating layer can be in contact with the content, the contamination of the content can be prevented.

### [Sealing Layer]

The sealing layer is not particularly limited as long as it is a layer having sealing properties. For example, a film or sheet having tackiness, such as a tacky film, a pressure-sensitive adhesive film, or a sealant film, may be used. For example, the sealing layer may be a layer coated with a coating layer with sealing properties that contains an organic solvent, an aqueous medium, or the like as a medium.

The sealant film is preferably a polyolefin-based film, such as a polyethylene film, a polypropylene film, or an ethylene-vinyl acetate copolymer, a film formed of an ionomer resin, an EAA resin, an EMAA resin, an EMA resin, an EMMA resin, or a biodegradable resin, or the like. Examples of generalized name thereof include a cast polypropylene (CPP) film, a vacuum metalized cast polypropylene (VMCPP) film, a linear low-density polyethylene (LLDPE) film, a low-density polypropylene (LDPE) film, a high-density polyethylene (HDPE) film, a vacuum metalized low-density polyethylene (VMLDPE) film, and the films containing a pigment. A surface of the film may be subjected to a variety of surface treatment, such as a flame treatment, a corona discharge treatment, or a chemical treatment with a primer or the like.

In particular, the layer coated with the coating agent with sealing properties is preferred since the tannic acid derivative is easily contained as described below. As a resin contained in the sealing layer, a publicly known resin that exhibits sealing properties is used.

### (Resin)

As the resin, for example, a publicly known thermoplastic resin used in heat sealing or cold sealing can be used. Specifically, a thermoplastic resin that does not exhibit tackiness at room temperature or lower and has a softening temperature of at least 40°C or higher is preferred. A thermoplastic resin having a glass transition temperature of at least -10°C or higher is preferred.

Examples of such thermoplastic resin include a polyester resin, a vinyl chloride resin, a vinyl chloride-vinyl acetate resin, an acrylic resin, a styrene-acrylic acid ester resin, a styrene-butadiene resin, a butadiene resin, a vinyl acetate resin, an ethylene-vinyl alcohol resin, an ethylene-acrylic acid ester resin, an ethylene-acrylic acid resin, an ethylene-vinyl acetate resin, a urethane resin, and a styrene-isoprene resin.

Among these, at least one type of resin selected from the group consisting of a urethane resin, an acrylic resin, a vinyl chloride-vinyl acetate copolymer resin, a polyester resin, an ethylene-vinyl acetate copolymer resin, and an ethylene-vinyl alcohol copolymer resin is preferred.

As the thermoplastic resin, a composition in which a major agent including a thermoplastic resin having a grafted or pendant reactive group, such as a hydroxyl group, a glycidyl group, or a carboxyl group, is combined with a curing agent that can be thermally reacted with the reactive group, such as an isocyanate curing agent or a polyamine curing agent can be used. Examples thereof include combinations of a major agent such as a polyester-based resin having a grafted or pendant reactive group, a polyether-based resin having a grafted or pendant reactive group, a polyurethane-based resin having a grafted or pendant reactive group, an epoxy resin having a grafted or pendant reactive group, or a polyol-based resin having a grafted or pendant reactive group, with a curing agent such as an isocyanate curing or a polyamine curing agent.

Specific examples thereof include polyols, such as polyethylene glycol, acrylic polyols, polyester polyols, polyether polyols, polyester polyether polyols, polyester polyurethane polyols, castor oil, dehydrated castor oil, hydrogenated castor oil that is a hydrogenated product of castor oil, and castor oil-based polyols, such as alkylene oxide 5 to 50-mol adducts of castor oil.

Examples of the curing agent include polyisocyanates having an aromatic structure in a molecular structure, such as tolylene diisocyanate, diphenylmethane diisocyanate, polymeric diphenylmethane diisocyanate, 1,5-naphthalene diisocyanate, triphenylmethane triisocyanate, and xylylene diisocyanate, compounds in which a part of NCO group in the polyisocyanates is modified with carbodiimide; allophanate compounds derived from the polyisocyanates; polyisocyanates having an alicyclic structure in a molecular structure, such as isophorone diisocyanate, 4,4'-methylene bis(cyclohexyl isocyanate), and 1,3-(isocyanatomethyl)cyclohexane; a linear aliphatic polyisocyanate, such as 1,6-hexamethylene diisocyanate, lysine diisocyanate, and trimethylhexamethylene diisocyanate, and allophanate compounds thereof; isocyanurate products of the polyisocyanates; allophanate products derived from the polyisocyanates; biuret products derived from the polyisocyanates; adduct products modified with trimethylolpropanes; multifunctional isocyanates, such as a polyisocyanate that is a reaction product of various types of polyisocyanate with a polyol component, and amine compounds, such as ethylenediamine, diethylenetriamine, triethylenetetramine, tetraethylenepentamine, pentaethylenehexamine, hexaethyleneheptamine, heptaethyleneoctamine, octaethylenenonamine, nenoaethylenedecamine, piperazine, polyethylenepolyamine, such as N-aminoalkylpiperazine having an alkyl chain having 2 to 6 carbon atoms, and 3-aminomethyl-3,5,5-trimethylcyclohexylamine (isophoronediamine, or IPDA).

### (Tannic Acid Derivative)

The sealing layer may contain a tannic acid derivative in which at least a part of a plurality of hydroxyl groups is substituted with a linear hydrocarbon group having 1 to 18 carbon atoms. Specifically, the coating layer disposed on a surface of the substrate may contain a tannic acid derivative in which at least a part of the hydroxyl groups is substituted with a linear hydrocarbon group having 1 to 18 carbon atoms, and the sealing layer disposed on another surface of the substrate may contain a tannic acid derivative in which at least a part of the hydroxyl groups is substituted with a linear hydrocarbon group having 1 to 18 carbon atoms.

It is preferable that the sealing layer be formed of an organic binder containing the tannic acid derivative and the resin. The organic binder preferably contains the tannic acid derivative and the resin.

The tannic acid derivative contained in the sealing layer may be the same as or different from the tannic acid derivative contained in the coating layer.

The content ratio of the tannic acid derivative in the sealing layer is preferably 0.1% by mass or more and 50% by mass or less, and more preferably 0.5% by mass or more and 20% by mass or less.

The mass ratio of the tannic acid derivative to the resin contained in the sealing layer is preferably 0.1:99.9 to 50:50, and more preferably 0.5:99.5 to 20:80.

### [Substrate]

The substrate is not particularly limited, and examples thereof include a paper substrate, a plastic substrate, and metal foil.

### (Paper Substrate)

A paper substrate is produced from paper natural fibers, such as wood pulp, by a known paper machine, and a paper manufacturing condition is not particularly defined. Examples of the paper natural fibers include wood pulp, such as softwood pulp and hardwood pulp, nonwood pulp, such as Manila hemp pulp, sisal pulp, and flax pulp, and pulp obtained by chemical modification of the pulp. As the type of pulp, chemical pulp, ground pulp, chemiground pulp, thermomechanical pulp, or the like obtained by a sulfate digestion method, an acidic, neutral, or alkaline sulfite digestion method, or a soda digestion method, can be used.

Various commercially available wood-free paper, coated paper, lining paper, impregnated paper, card board, or paperboard can be used.

### (Plastic Substrate)

The plastic substrate may be a substrate used for a substrate such as a plastic material, a molded article, a film substrate, a packaging material, or the like. In particular, when gravure roll coating (gravure coater) or flexographic roll coating (flexo coater) is used, a film substrate usually used in gravure-flexographic printing fields is used as it is.

Specific examples thereof include films formed of thermoplastic resins including biodegradable resins including polyamide resins, such as nylon 6, nylon 66, and nylon 46, polyester-based resins, such as polyethylene terephthalate (hereinafter sometimes referred to as PET), polyethylene naphthalate, polytrimethylene terephthalate, polytrimethylene naphthalate, polybutylene terephthalate, and polybutylene naphthalate, polyhydroxycarboxylic acids, such as polylactic acid, and aliphatic polyester-based resins, such as poly(ethylene succinate) and poly(butylene succinate), polyolefin resins, such as a polypropylene and a polyethylene, a polyimide resin, a polyarylate resin, and a mixture thereof, and laminates of the films. In particular, a film formed of polyethylene terephthalate (PET), a polyester, a polyamide, a polyethylene, or a polypropylene can be suitably used. The substrate film may be either a unstretched film or a stretched film, and a method for producing the substrate film is not limited. The thickness of the substrate film is not particularly limited, and may be usually within the range of 1 um to 500 um. It is preferable that the substrate film be subjected to corona discharge treatment. Aluminum, silica, alumina, or the like may be evaporated onto the substrate film.

### (Metal Foil)

The metal foil is not particularly limited. Various types of publicly known metal foil can be used. Examples of metal material for the metal foil include aluminum, gold, silver, copper, stainless, titanium, and nickel. Among these, copper foil or aluminum foil is preferred from the viewpoint of easy production process and cost.

The substrate may be a laminate (sometimes referred to as laminated film) having a laminated structure in which the paper substrate or the film substrate is laminated by a dry lamination method, a solventless lamination method, or an extrusion lamination method. The configuration of the laminate may include metal foil, a metal-evaporated film layer, an inorganic evaporated film layer, an oxygen absorption layer, an anchor coating layer, a decorative layer such as a printing layer, a varnish layer, or the like. There are various laminates corresponding to applications. As a configuration that is the most often used for food packaging and daily supplies, the following configuration is considered as a specific aspect of a laminated film. In the configuration, F represents a paper substrate or a film substrate, P represents printing or a varnish layer, M represents metal foil, a metal of an evaporated film layer or an inorganic layer, AD represents an adhesive layer, and AD2 represents a hot-melt adhesive, a heat sealing agent, or a cold sealing agent. The laminated film according to the present embodiment is not limited to the following configuration.

(F)/(P)/(F)
(F)/(P)/(AD)/(F),
(F)/(P)/(AD)/(F)/(AD)/(F),
(F)/(P)/(AD)/(M)/(AD)/(F),
(F)/(P)/(AD)/(M),
(F)/(P)/(AD)/(F)/(AD)/(M)/(AD)/(F),
(F)/(P)/(AD)/(M)/(AD)/(F)/(AD)/(F),
(M)/(P)/(AD)/(M),
(M)/(P)/(AD)/(F)/(AD)/(M),
(P)/(F)
(P)/(F)/(P)
(P)/(F)/(AD)/(F),
(P)/(F)/(AD)/(F)/(AD)/(F)
(F)/(P)/(F)/(AD2)
(F)/(P)/(AD2)
(F)/(P)/(AD)/(M)/(AD2)

Depending on the industry, a using method, and the like, the paper substrate or the film substrate of the single layer, or the laminate having a laminated structure of multiple layers are used in various expressions of a functional film, a flexible packaging film, a shrink film, a daily supplies packaging film, a pharmaceutical packaging film, a food packaging film, paper including wood-free paper, coated paper, art paper, simili paper, thin paper, and thick paper used for a carton, a poster, a leaflet, a CD jacket, a direct mail, a pamphlet, or a package of a cosmetic, a beverage, a pharmaceutical, a toy, and an apparatus, or a variety of synthetic paper. The coating agent can be used without particular limitation. When the substrate or the laminate is used in a container or as a packaging material, it is preferable that a plane of an outermost surface layer be coated with the coating agent.

### [Decorative layer]

The laminate according to the embodiment may include a decorative layer disposed on a surface of the substrate opposite to the sealing layer. In this case, the coating layer may constitute the decorative layer, or the decorative layer may be provided separately from the coating layer. When the coating layer constitutes the decorative layer, the decorative layer contains the tannic acid derivative. When the decorative layer is provided separately from the coating layer, the decorative layer is provided, for example, between the substrate and the coating layer.

The decorative layer may be formed of a printing layer containing a printing ink. The printing ink used in the printing layer is not particularly limited, and examples thereof include an offset planographic printing ink, a gravure printing ink, a flexographic printing ink, and an ink-jet printing ink.

### [Varnish Layer]

The laminate according to the embodiment may further include a varnish layer disposed on a surface of the substrate opposite to the sealing layer. In this case, the coating layer may constitute the varnish layer, or the varnish layer may be provided separately from the coating layer. When the coating layer constitutes the varnish layer, the varnish layer contains the tannic acid derivative. When the varnish layer is provided separately from the coating layer, the varnish layer is provided, for example, on a surface of the coating layer opposite to the substrate. When the coating layer constitutes the decorative layer, the varnish layer may be provided on the decorative layer.

A varnish used in the varnish layer is not particularly limited, and examples thereof include an acrylic resin, a polyester resin, a urethane resin, cellulose, cellulose nitrate, and amides.

### <Method for Producing Laminate>

The laminate according to the present embodiment can be produced, for example, by (1) a step of applying the coating agent to the surface of the substrate, (2) a step of drying the coating agent to form the coating layer, (3) a step of applying a sealing agent to the other surface of the substrate, and (4) a step of drying the agent to form the sealing layer.

In the step (1), the amount of the applied coating agent is not particularly limited, and is preferably 0.5 g/cm² or more and 10 g/cm² or less, and more preferably 1.0 g/cm² or more and 5.0 g/cm² or less.

### [Coating Agent]

The coating agent contains a tannic acid derivative in which at least a part of a plurality of hydroxyl groups is substituted with a linear hydrocarbon group having 1 to 18 carbon atoms, at least one type of resin selected from the group consisting of a urethane resin, an acrylic resin, a vinyl chloride-vinyl acetate copolymer resin, a polyester resin, and an olefin resin, and a medium. As the medium of the coating agent, a solvent such as an organic solvent can be used.

### (Solvent)

The solvent is not particularly limited, and examples thereof include aromatic hydrocarbon-based organic solvents, such as toluene, xylene, Solvesso #100, and Solvesso #150, aliphatic hydrocarbon-based organic solvent, such as hexane, methylcyclohexane, heptane, octane, and decane, and ester-based organic solvents, such as methyl acetate, ethyl acetate, isopropyl acetate, normal propyl acetate, butyl acetate, amyl acetate, ethyl formate, and butyl propionate. Examples of a water-miscible organic solvent include alcohol-based organic solvents, such as methanol, ethanol, propanol, butanol, and isopropyl alcohol, ketone-based organic solvents, such as acetone, methyl ethyl ketone, and cyclohexanone, and glycol ether-based organic solvents, such as ethylene glycol (mono or di)methyl ether, ethylene glycol (mono or di)ethyl ether, ethylene glycol monopropyl ether, ethylene glycol monoisopropyl ether, monobutyl ether, diethylene glycol (mono or di)methyl ether, diethylene glycol (mono or di)ethyl ether, diethylene glycol monoisopropyl ether, diethylene glycol monobutyl ether, triethylene glycol (mono or di)methyl ether, propylene glycol (mono or di)methyl ether, propylene glycol monopropyl ether, propylene glycol monobutyl ether, and dipropylene glycol (mono or di)methyl ether. The solvents can be used alone, a mixture of two or more types thereof can be used.

In terms of operation sanitation during printing and harmfulness of a packaging material, it is more preferable that ethyl acetate, propyl acetate, isopropanol (2-propanol), normal propanol, or the like be used and the aromatic solvent, such as toluene, or the ketone-based solvent, such as methyl ethyl ketone be not used.

The content ratio of the tannic acid derivative in the coating agent of the embodiment is preferably 0.1% by mass or more and 50% by mass or less, and more preferably 0.5% by mass or more and 20% by mass or less.

The content ratio of the resin in the coating agent of the embodiment is preferably 0.1% by mass or more and 99.9% by mass or less, and more preferably 0.5% by mass or more and 99.5% by mass or less.

### (Other Additives)

In order to impart desired based physical properties to the coating agent, the coating agent may contain a curing agent, a wax, a chelating crosslinker, an extender pigment, a leveling agent, an anti-foaming agent, a plasticizer, an infrared absorber, an ultraviolet absorber, a fragrance, a flame retarder, and the like.

### (Method for Producing Coating Agent)

The coating agent used in the present disclosure can be produced by dissolving and/or dispersing the resin and the tannic acid derivative as the binder in the organic solvent. As a dispersion machine, a commonly used machine, for example, a roller mill, a ball mill, a pebble mill, an attrition mill, a sand mill, or the like can be used.

In the step (3), the amount of the applied sealing agent is not particularly limited, and is preferably 1.0 g/cm² or more and 10 g/cm² or less, and more preferably 1.0 g/cm² or more and 5.0 g/cm² or less.

### [Sealing Agent]

The sealing agent is not particularly limited, and the sealing agent contains the publicly known resin that exhibits sealing properties and a medium. It is preferable that the sealing agent contain a publicly known thermoplastic resin used in heat sealing or cold sealing. As the medium of the sealing agent, a solvent such as an organic solvent or an aqueous medium can be used.

### (Solvent)

An organic solvent is added to dilute the sealing agent and facilitate applying. Specifically, toluene, xylene, methylene chloride, tetrahydrofuran, methanol, ethanol, isopropyl alcohol, methyl acetate, ethyl acetate, n-butyl acetate, acetone, methyl ethyl ketone (MEK), cyclohexanone, toluol, xylol, n-hexane, cyclohexane, or the like that has high solubility may be used in dilution. From the viewpoint of recent regulation of solvent, methanol, ethanol, isopropyl alcohol, methyl acetate, ethyl acetate, n-butyl acetate, acetone, methyl ethyl ketone (MEK), cyclohexanone, toluol, xylol, n-hexane, or cyclohexane may be used. Among these, from the viewpoint of solubility, ethyl acetate or methyl ethyl ketone (MEK) is preferably used, and ethyl acetate is particularly preferably used. A solution using only a solvent that is free from the regulation is stable at a low temperature. Although the amount of the organic solvent used depends on a required viscosity, the organic solvent is often used within the range of about 20% by mass or more and about 80% by mass or less.

The sealing agent may contain a tannic acid derivative in which at least a part of a plurality of hydroxyl groups is substituted with a linear hydrocarbon group having 1 to 18 carbon atoms. The content ratio of the tannic acid derivative in the sealing agent is not particularly limited, and is preferably 0.1% by mass or more and 50% by mass or less, and more preferably 0.5% by mass or more and 20% by mass or less.

### (Method for Producing Sealing Agent)

When the sealing agent contains the tannic acid derivative, the sealing agent can be produced by dissolving and/or dispersing the binder resin and the tannic acid derivative as the binders in a medium. As a dispersion machine, a commonly used machine, for example, a roller mill, a ball mill, a pebble mill, an attrition mill, a sand mill, or the like can be used.

The method for producing the laminate is not limited to the steps (1) to (4) and the order thereof. In the method for producing the laminate, for example, the coating agent is first applied to the surface of the substrate and the sealing agent is applied to the other surface of the substrate (the steps (1) and (3)), and the coating agent and the sealing agent may be then dried (the steps (2) and (4)).

When the laminate includes the decorative layer, the coating agent for the decorative layer can be applied to the substrate in the step (1). When the laminate includes the decorative layer separately from the coating layer, a step of forming the decorative layer on the other surface of the substrate may be performed prior to the step (1). In this case, the coating agent can be then applied to the decorative layer, and dried.

When the laminate includes the varnish layer, the coating agent for the varnish layer can be applied to the substrate in the step (1). When the laminate includes the varnish layer separately from the coating layer, a step of forming the varnish layer on the coating layer may be performed after the step (1).

### [Specific Configuration of Laminate, and Packaging body or Container]

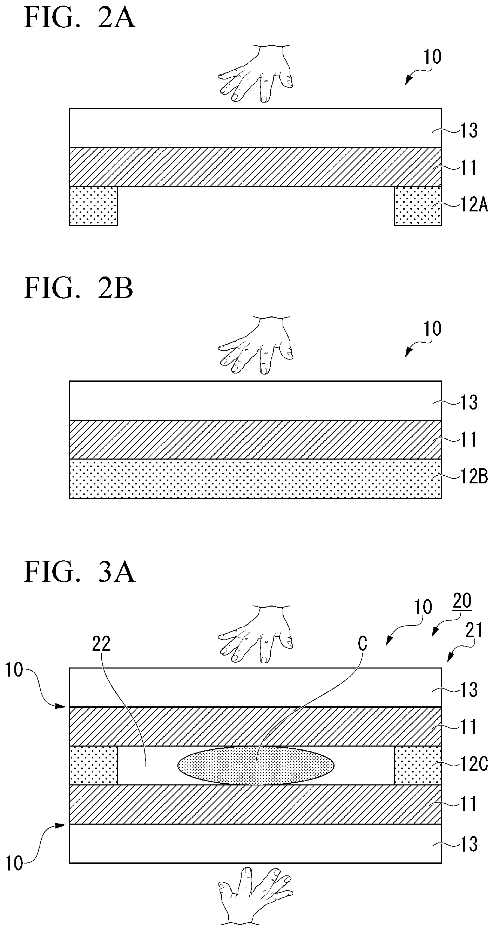

FIGs. 2A and 2B are cross-sectional views illustrating an example of a specific configuration of the laminate according to the embodiment.

As illustrated in FIG. 2A, a laminate 10 includes a substrate 11, a sealing layer 12A disposed on a surface of the substrate 11, and a coating layer 13 disposed on a surface of the substrate 11 opposite to the sealing layer 12A. The coating layer 13 contains (1) a tannic acid derivative in which at least a part of a plurality of hydroxyl groups is substituted with a linear hydrocarbon group having 1 to 18 carbon atoms, and (2) at least one type of resin selected from the group consisting of a urethane resin, an acrylic resin, a vinyl chloride-vinyl acetate copolymer resin, a polyester resin, and an olefin resin. Hereinafter, the coating layer containing the compounds of (1) and (2) is also simply referred to as "antibacterial coating layer".

In the embodiment, the antibacterial coating layer 13 is disposed on the whole surface of the substrate 11. The antibacterial coating layer 13 is positioned on the outermost surface of the laminate 10. The sealing layer 12A is disposed on a part of the surface of the substrate 11, for example, at an outer edge of the surface of the substrate 11. Therefore, the sealing layer 12A can be used as a sealing portion during construction of a packaging body described below.

As illustrated in FIG. 2B, the laminate 10 includes the substrate 11, a sealing layer 12B disposed on a surface of the substrate 11, and the antibacterial coating layer 13 disposed on a surface of the substrate 11 opposite to the sealing layer 12B. The sealing layer 12B is disposed on the whole surface of the substrate 11. Therefore, a part (outer edge) of the sealing layer 12B can be used as a sealing portion during construction of a packaging body described below.

FIG. 3A is a cross-sectional view illustrating an example of a specific configuration of a packaging body with the laminate 10 according to the embodiment.

As illustrated in FIG. 3A, a packaging body 20 includes an outer package 21 in which two laminates 10 are bonded, and a compartment 22 disposed inside the outer package 21. Herein, the outer package 21 is configured such that the two laminates 10 are bonded with the antibacterial coating layer 13 of each of the laminates 10 facing outward in a laminating direction. The compartment 22 allows a content C to be housed. A food product, a pharmaceutical, and the like are housed in the compartment 22. The compartment 22 may contain a gas such as air or may be under reduced pressure such as in vacuum.

Each of the laminates 10 includes the substrate 11, a sealing layer 12C disposed on a surface of the substrate 11, and the antibacterial coating layer 13 disposed on a surface of the substrate 11 opposite to the sealing layer 12C.

The sealing layer 12C is formed, for example, by bonding the two sealing layers 12A (FIG. 2A) disposed on the two laminates 10. The sealing layer 12A may be disposed on only one of the two laminates 10, and the sealing layer 12A may not be disposed on the other. In this case, the sealing layer 12C is formed of the sealing layer 12A on one of the two laminates 10. By sealing of the sealing layer 12C, the compartment 22 is isolated from the outside, and the closed state or the sealed state of the compartment 22 is maintained.

In the embodiment, the antibacterial coating layer 13 constitutes the outermost layer of the packaging body 20. The specific tannic acid derivative is held inside the resin of the antibacterial coating layer 13 or on the surface of the resin. According to this configuration, the antibacterial coating layer 13 can suppress proliferation of bacteria, viruses, and the like even when a substance such as bacteria and virus is attached to the antibacterial coating layer 13, for example, by contact with human and the like.

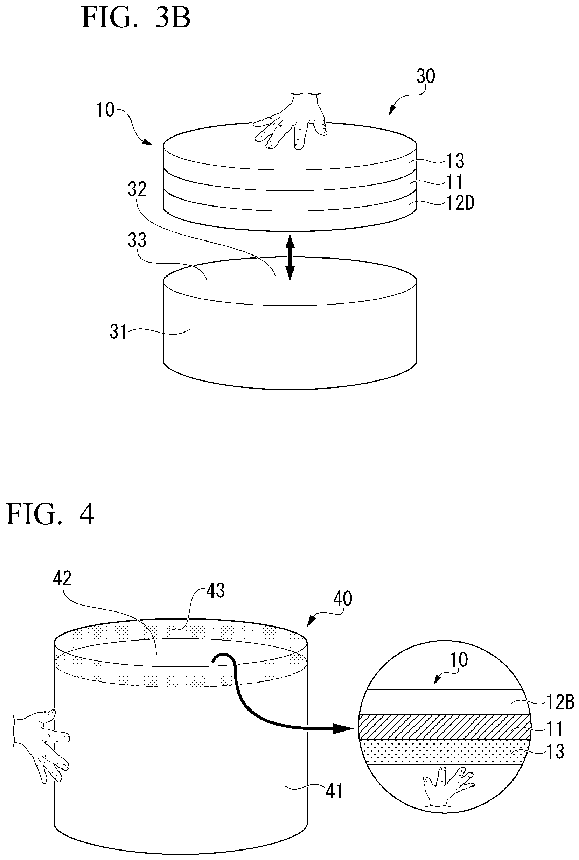

FIG. 3B is a perspective view illustrating an example of a specific configuration of a container with the laminate 10 according to the embodiment.

As illustrated in FIG. 3B, a container 30 includes a container body 31 and the laminate 10 attached to the container body 31.

Each of the laminates 10 includes the substrate 11, a sealing layer 12D disposed on a surface of the substrate 11, and the antibacterial coating layer 13 disposed on a surface of the substrate 11 opposite to the sealing layer 12D. The sealing layer 12D contains a tannic acid derivative in which at least a part of a plurality of hydroxyl groups is substituted with a linear hydrocarbon group having 1 to 18 carbon atoms. Hereinafter, the sealing layer containing the specific tannic acid derivative is also simply referred to as "antibacterial sealing layer".

In the embodiment, the laminate 10 constitutes a lid member of the container body 31 and is attached to the container body 31 so as to close an opening 32 of the container body 31. In this case, an internal space 33 is isolated from the outside by sealing of the antibacterial sealing layer 12D, and the closed state or the sealed state of the internal space 33 is maintained.

The antibacterial sealing layer 12D constitutes the innermost layer of the lid member. The specific tannic acid derivative is held inside the resin of the antibacterial sealing layer 12D or on the surface of the resin. Even when a content housed in the internal space 33 of the container body 31, such as a food product or a pharmaceutical, is brought into contact with the antibacterial sealing layer 12D, this configuration can prevent contamination of the content due to elution of antibacterial substance contained in the sealing layer, and the like.

FIG. 4 is a perspective view illustrating another example of the specific configuration of the packaging body with the laminate 10 according to the embodiment.

As illustrated in FIG. 4, a packaging body 40 includes an outer package 41 in which a plurality of laminates 10 are bonded, and a compartment 42 disposed inside the outer package 41. Each of the laminates 10 includes the substrate 11, the sealing layer 12B disposed on a surface of the substrate 11, and the antibacterial coating layer 13 disposed on a surface of the substrate 11 opposite to the sealing layer 12B. For example, the compartment 42 is configured such that the laminate 10 positioned on a bottom is bonded to the laminate 10 positioned at an outer periphery.

The sealing layer 12B is disposed on at part of the surface of the substrate 11 and on an opening 43 of the outer package 41. A content is housed in the compartment 42 of the packaging body 40, and heat sealing is then performed such that the opening 43 is closed and the sealing layers 12B are in contact with each other. Thus, the compartment 42 is isolated from the outside, and the closed state or the sealed state of the compartment 42 is maintained.

In the embodiment, the antibacterial coating layer 13 constitutes the outermost layer of the packaging body 40. The specific tannic acid derivative is held inside the resin of the antibacterial coating layer 13 or on the surface of the resin. According to this configuration, the antibacterial coating layer 13 suppresses proliferation of bacteria, viruses, and the like.

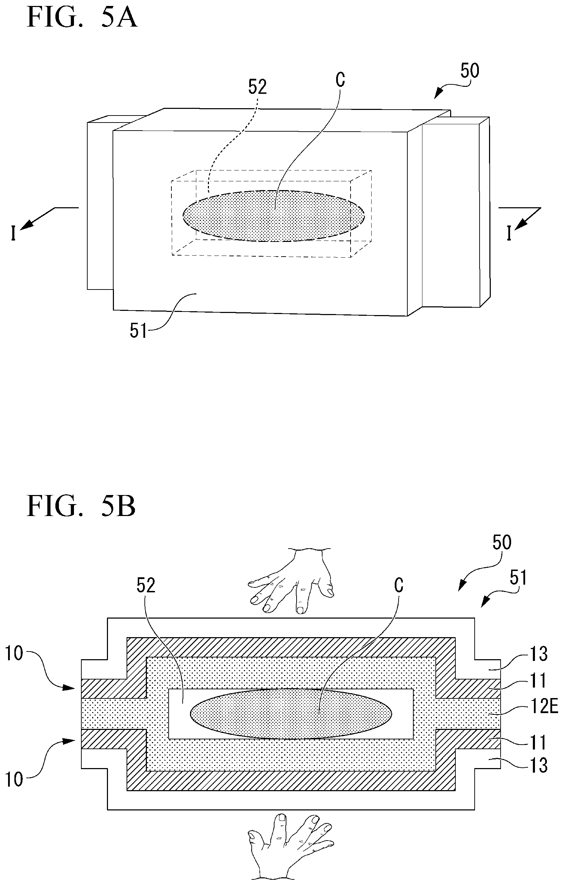

FIG. 5A is a perspective view illustrating still another example of the specific configuration of the packaging body with the laminate 10 according to the embodiment. FIG. 5B is a cross-sectional view taken along line I-I in FIG. 5A.

As illustrated in FIGs. 5A and 5B, a packaging body 50 includes an outer package 51 in which the two laminates 10 are bonded, and a compartment 52 disposed inside the outer package 21. The compartment 52 allows a content C to be housed. A food product, a pharmaceutical, and the like are housed in the compartment 52. The compartment 52 may contain a gas such as air or may be under reduced pressure such as in vacuum.

Each of the laminates 10 includes the substrate 11, an antibacterial sealing layer 12E disposed on a surface of the substrate 11, and the antibacterial coating layer 13 disposed on a surface of the substrate 11 opposite to the sealing layer 12E.

The antibacterial sealing layer 12E is formed, for example, by bonding the two sealing layers 12A (FIG. 2B) disposed on the two laminates 10. The sealing layer 12A may be disposed on only one of the two laminates 10, and the sealing layer 12A may not be disposed on the other. In this case, the antibacterial sealing layer 12E is formed of the sealing layer 12A on one of the two laminates 10. By sealing of the antibacterial sealing layer 12E, the compartment 52 is isolated from the outside, and the closed state or the sealed state of the compartment 52 is maintained.

The antibacterial coating layer 13 constitutes the outermost layer of the packaging body 20. The specific tannic acid derivative is held inside the resin of the antibacterial coating layer 13 or on the surface of the resin.

According to this configuration, the antibacterial coating layer 13 can suppress proliferation of bacteria, viruses, and the like. Furthermore, this configuration can prevent contamination of the content C due to elution of antibacterial substance contained in the antibacterial sealing layer 12E, and the like.

The antibacterial coating layer 13 may constitute the decorative layer or the varnish layer. This configuration can suppress proliferation of bacteria, viruses, and the like and prevent contamination of the content C, can simplify the layer constitution, and can achieve weight saving of the packaging body and cost reduction.

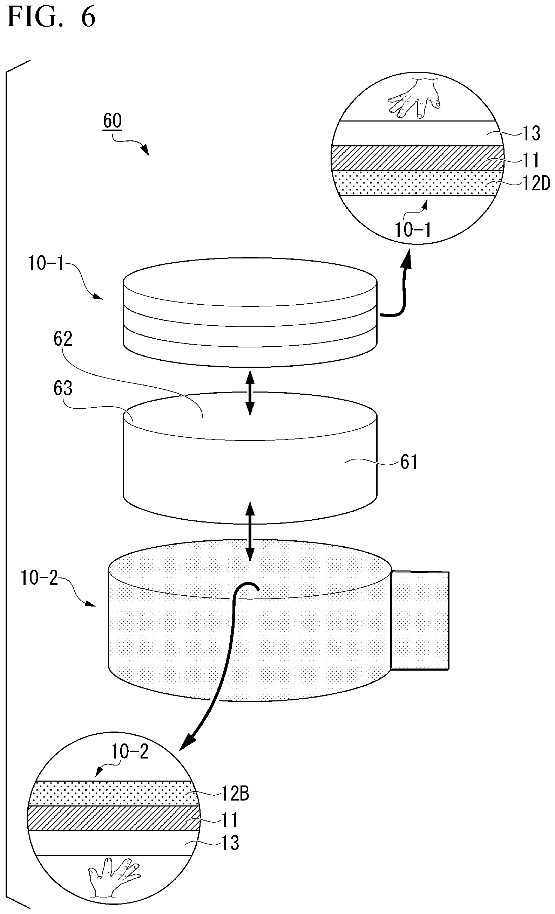

FIG. 6 is a perspective view illustrating still another example of the specific configuration of the container with the laminate 10 according to the embodiment.

As illustrated in FIG. 6, a container 60 includes a container body 61 and two laminates 10-1 and 10-2 attached to the container body 61.

The laminate 10-1 includes the substrate 11, the antibacterial sealing layer 12D disposed on a surface of the substrate 11, and the antibacterial coating layer 13 disposed on a surface of the substrate 11 opposite to the sealing layer 12D. The laminate 10-1 constitutes a lid member of the container body 61 and is attached to the container body 61 so as to close an opening 62 of the container body 61. In this case, an internal space 63 is isolated from the outside by sealing of the antibacterial sealing layer 12D, and the closed state or the sealed state of the internal space 63 is maintained.

The antibacterial coating layer 13 of the laminate 10-1 constitutes the outermost layer of the packaging body 60. The specific tannic acid derivative is held inside the resin of the antibacterial coating layer 13 or on the surface of the resin. The antibacterial sealing layer 12D constitutes the innermost layer of the container 60. The specific tannic acid derivative is held inside the resin of the antibacterial sealing layer 12D or on the surface of the resin.

The laminate 10-2 includes the substrate 11, the sealing layer 12B disposed on a surface of the substrate 11, and the antibacterial coating layer 13 disposed on a surface of the substrate 11 opposite to the sealing layer 12B. The laminate 10-2 is attached to the outer surface, for example, the outer circumferential surface of the container body 61. The antibacterial coating layer 13 of the laminate 10-2 constitutes the outermost layer of the packaging body 60. The specific tannic acid derivative is held inside the resin of the antibacterial coating layer 13 or on the surface of the resin.

According to this configuration, the antibacterial coating layer 13 of the laminate 10-1 and the antibacterial coating layer 13 of the laminate 10-2 can suppress proliferation of bacteria, viruses, and the like. Furthermore, this configuration can prevent contamination of the content C due to elution of antibacterial substance contained in the antibacterial sealing layer 12D, and the like.

### Examples

Hereinafter, Examples of the present invention will be described. The present invention is not limited to the following Examples. In Examples, a unit in Tables are % by mass unless otherwise specified.

### (Synthesis of Tannic Acid Derivative)

### [Synthesis Example 1]

35 parts of tannic acid (available from Tokyo Chemical Industry Co., Ltd.) and 65 parts of n-methyl iodide were dissolved in N,N-dimethylformamide (hereinafter referred to as DMF), 63 parts of potassium carbonate was added, and a reaction was performed at 85°C for 10 hours. Subsequently, DMF was distilled under reduced pressure, and water-washing and drying steps were performed, to obtain a tannic acid derivative (TA1-5) in which 5 equivalent of alkyl group having a carbon atom (20% of the number of substituents) was substituted. In Synthesis Examples 1 to 6, materials available from Tokyo Chemical Industry Co., Ltd., were used for all the materials to perform synthesis.

### [Synthesis Example 2]

62 parts of tannic acid and 38 parts of n-hexyl iodide were dissolved in DMF, 25 parts of potassium carbonate was added, and a reaction was performed at 85°C for 10 hours. Subsequently, DMF was distilled under reduced pressure, and water-washing and drying steps were performed, to obtain a tannic acid derivative (TA6-5) in which 5 equivalent of alkyl group having six carbon atoms was substituted.

### [Synthesis Example 3]

35 parts of tannic acid and 65 parts of n-octadecane iodide were dissolved in DMF, 24 parts of potassium carbonate was added, and a reaction was performed at 85°C for 10 hours. Subsequently, DMF was distilled under reduced pressure, and water-washing and drying steps were performed, to obtain a tannic acid derivative (TA18-5) in which 5 equivalent of alkyl group having 18 carbon atoms was substituted.

### [Synthesis Example 4]

37 parts of tannic acid and 63 parts of n-methyl iodide were dissolved in DMF, 61 parts of potassium carbonate was added, and a reaction was performed at 85°C for 10 hours. Subsequently, DMF was distilled under reduced pressure, and water-washing and drying steps were performed, to obtain a tannic acid derivative (TA1-20) in which 20 equivalent of alkyl group having a carbon atom (75% of the number of substituents) was substituted.

### [Synthesis Example 5]

29 parts of tannic acid and 71 parts of n-hexyl iodide were dissolved in DMF, 46 parts of potassium carbonate was added, and a reaction was performed at 85°C for 10 hours. Subsequently, DMF was distilled under reduced pressure, and water-washing and drying steps were performed, to obtain a tannic acid derivative (TA6-20) in which 20 equivalent of alkyl group having 6 carbon atoms was substituted.

### [Synthesis Example 6]

28 parts of tannic acid and 82 parts of n-octadecane iodide were dissolved in DMF, 30 parts of potassium carbonate was added, and a reaction was performed at 85°C for 10 hours. Subsequently, DMF was distilled under reduced pressure, and water-washing and drying steps were performed, to obtain a tannic acid derivative (TA18-20) in which 20 equivalent of alkyl group having 18 carbon atoms was substituted.

### (Method for Producing Coating Agent and Sealing Coating Agent)

Resins A, B, C, and E were dissolved in methyl ethyl ketone (hereinafter referred to as MEK), to produce a resin solution having a solid content of 40%.

Resin A: vinyl chloride-vinyl acetate copolymer resin "SOLBIN A available from Nissin Chemical Industry Co., Ltd."

Resin B: polyester resin "VYLON GK-880 available from Toyobo Co., Ltd."

Resin C: acrylic resin "DEGALAN (registered trademark) P74 available from EVONIK"

Resin E: urethane resin "SANPRENE IB-465 available from Sanyo Chemical Industries, Ltd."

As a sealing coating agent, a sealing agent D was used as it was.

Sealing agent D: acrylic resin "DICSEAL A-415 available from DIC Graphics Corporation"

The tannic acid derivatives produced in Synthesis Examples 1 to 6 were mixed at a composition listed in Tables 1A and 1B, to produce coating agents 1 to 8 and 15 and a sealing coating agent 1. In Tables 1A and 1B, "clear" means that the appearance of a solution is transparent.

**[Table 1A]**

| Table 1A | Coating agent 1 | Coating agent 2 | Coating agent 3 | Coating agent 4 | Coating agent 5 | Coating agent 6 |
|---|---|---|---|---|---|---|
| TA1-5 | | | 4 | | | |
| TA6-5 | 0.2 | 4 | | | | |
| TA18-5 | | | | 4 | | |
| TA1-20 | | | | | 4 | |
| TA6-20 | | | | | | 4 |
| TA18-20 | | | | | | |
| Resin A solution | 99.5 | 90 | 90 | 90 | 90 | 90 |
| Resin B solution | | | | | | |
| Resin C solution | | | | | | |
| Sealing agent D | | | | | | |
| MEK | 0.3 | 6 | 6 | 6 | 6 | 6 |
| Total | | 100 | 100 | 100 | 100 | 100 |
| Appearance of solution | Clear | Clear | Clear | Clear | Clear | Clear |

**[Table 1B]**

| Table 1B | Coating agent 7 | Coating agent 8 | Coating agent 15 | Sealing coating agent 1 |
|---|---|---|---|---|
| TA1-5 | | | | |
| TA6-5 | 4 | 4 | 4 | |
| TA18-5 | | | | |
| TA1-20 | | | | |
| TA6-20 | | | | |
| TA18-20 | | | | 4 |
| Resin A solution | | | | |
| Resin B solution | 90 | | | |
| Resin C solution | | 90 | | |
| Resin E solution | | | 90 | |
| Sealing agent D | | | | 90 |
| MEK | 6 | 6 | 6 | 6 |
| Total | 100 | 100 | 100 | 100 |
| Appearance of solution | Clear | Clear | Clear | Clear |

### Examples 1 to 10

### (Production of Laminate)

Each of the coating agents 1 to 8 and 15 or the sealing coating agent 1 was applied to 8-um aluminum foil as a substrate such that the amount of the coating agent was 5 g/m² (solid content), and the organic solvent was volatilized at 80°C for 2 minutes, to produce a laminate.

The laminates obtained in Examples 1 to 10 were then evaluated by the following processes. For the laminates having the coating layers formed of the coating agents 1 to 8 and 15, an antibacterial test was performed. For the laminate having the coating layer formed of the sealing coating agent 1, an antibacterial test, a sealing test, and a packaging body test were performed.

### <Antibacterial Test>

For an antibacterial test, E. coli was used. The test was performed in accordance with JIS Z2801 (only E. coli). Evaluation was performed using an antibacterial activity value that was a value exhibiting a difference in the logarithm of viable cell count after inoculation and cultivation of bacteria between an antibacterial processed product and an unprocessed product. When the antibacterial activity value is 2 or more, the laminate is "antibacterial", and when the antibacterial activity value is less than 2, the laminate is "not antibacterial".

### <Sealing Test>

Sealing layers were heat-sealed by a sealing coating agent at a sealing temperature of 150°C and a pressure of 1 kg/cm² for 1 second with a heat gradient heat sealing tester (manufactured by TESTER SANGYO CO., LTD.). The sealing strength was measured at a sample width of 15 mm and a tensile speed of 200 mm/min as a heat sealing strength. When the heat sealing strength is 2 N/15 mm or more, the sample is "acceptable".

### <Packaging Body Test>

A two-component reactive adhesive in which DICDRY LX-470EL and SP-60 (available from DIC Graphics Corporation) were mixed at a ratio of 1:1 was applied to a 20-µm OPP film and a 30-um CPP film in an application amount of solid content of 2.0 g/m², and the films were laminated. The sealing coating agent was applied to the whole surface on a side of the CPP film of the laminated film, and the organic solvent was dried, to produce a sealing layer. The laminated film was folded such that the sealing layer was inside, and the sealing layer was heat-sealed at 1 atm and 150°C for 1 second, to produce a packaging body (pouch) having a contact area with a content of 200 cm².

The obtained packaging body was filled with natural cheese and stored at room temperature for 10 days. A change of appearance of the content was checked. When the appearance is not changed with time, the packaging body is "acceptable".

The results of evaluation by the aforementioned methods of Examples 1 to 10 are listed in Tables 2A to 2B.

**[Table 2A]**

| Table 2A | Example 1 | Example 2 | Example 3 | Example 4 | Example 5 | Example 6 |
|---|---|---|---|---|---|---|
| Coating layer | Coating agent 1 | Coating agent 2 | Coating agent 3 | Coating agent 4 | Coating agent 5 | Coating agent 6 |
| Antibacterial properties | Present | Present | Present | Present | Present | Present |
| Sealing test | - | - | - | - | - | - |
| Packaging body test | - | - | - | - | - | - |

**[Table 2B]**

| Table 2B | Example 7 | Example 8 | Example 10 | Example 9 |
|---|---|---|---|---|
| Coating layer | Coating agent 7 | Coating agent 8 | Coating agent 15 | Sealing coating agent 1 |
| Antibacterial properties | Present | Present | Present | Present |
| Sealing test | - | - | - | Acceptable |
| Packaging body test | - | - | - | Acceptable |

### Comparative Example 1

A coating agent 9 was produced and a laminate was produced in the same manner as in Example 1 except for using tannic acid that was not alkyl-modified.

### Comparative Example 2

A coating agent 10 was produced and a laminate was produced in the same manner as in Example 7 except that tannic acid that was not alkyl-modified was used, the content of tannic acid was changed to 0.2% by mass, and the content of the resin B was changed to 99.5%.

### Comparative Example 3

A coating agent 11 was produced and a laminate was produced in the same manner as in Example 8 except that tannic acid that was not alkyl-modified was used, the content of tannic acid was changed to 0.2% by mass, and the content of the resin C was changed to 99.5%.

### Comparative Example 4

A sealing coating agent 2 was produced and a laminate was produced in the same manner as in Example 9 except that tannic acid that was not alkyl-modified was used, the content of tannic acid was changed to 0.2% by mass, and the content of the sealing agent D was changed to 99.5%.

### Comparative Example 5

A coating agent 12 was produced and a laminate was produced in the same manner as in Example 1 except that tannic acid was not used and only a solution of the resin A was used.

### Comparative Example 6

A coating agent 13 was produced and a laminate was produced in the same manner as in Example 7 except that tannic acid was not used and only a solution of the resin B was used.

### Comparative Example 7

A coating agent 14 was produced and a laminate was produced in the same manner as in Example 8 except that tannic acid was not used and only a solution of the resin C was used.

### Comparative Example 8

A coating agent 3 was produced and a laminate was produced in the same manner as in Example 9 except that tannic acid was not used and only the sealing agent D was used.

### Comparative Example 9

A coating agent 15 was produced and a laminate was produced in the same manner as in Example 10 except that tannic acid that was not alkyl-modified was used, the content of tannic acid was changed to 0.2% by mass, and the content of the resin E was changed to 99.5%.

### Comparative Example 10

A coating agent 16 was produced and a laminate was produced in the same manner as in Example 10 except that tannic acid was not used and only a solution of the resin E was used.

The results of evaluation by the aforementioned methods of Comparative Examples 1 to 10 are listed in Tables 3A to 3B.

**[Table 3A]**

| Table 3A | Comparative Example 1 | Comparative Example 2 | Comparative Example 3 | Comparative Example 4 | Comparative Example 9 |
|---|---|---|---|---|---|
| Coating layer | Coating agent 9 | Coating agent 10 | Coating agent 11 | Sealing coating agent 2 | Coating agent 15 |
| Tannic acid | 0.2 | 0.2 | 0.2 | 0.2 | 0.2 |
| Resin A solution | 99.5 | | | | |
| Resin B solution | | 99.5 | | | |
| Resin C solution | | | 99.5 | | |
| Sealing agent D | | | | 99.5 | |
| Resin E solution | | | | | 99.5 |
| MEK | 0.3 | 0.3 | 0.3 | 0.3 | 0.3 |
| Total | 100 | 100 | 100 | 100 | 100 |
| Appearance of solution | Precipitation | Precipitation | Precipitation | Precipitation | Precipitation |
| Antibacterial properties | None | None | None | None | None |

**[Table 3B]**

| Table 3B | Comparative Example 5 | Comparative Example 6 | Comparative Example 7 | Comparative Example 8 | Comparative Example 10 |
|---|---|---|---|---|---|
| Coating layer | Coating agent 12 | Coating agent 13 | Coating agent 14 | Sealing coating agent 3 | Coating agent 16 |
| Tannic acid | | | | | |
| Resin A solution | 100 | | | | |
| Resin B solution | | 100 | | | |
| Resin C solution | | | 100 | | |
| Sealing agent D | | | | 100 | |
| Resin E solution | | | | | 100 |
| MEK | | | | | |
| Total | 100 | 100 | 100 | 100 | 100 |
| Antibacterial properties | None | None | None | None | None |

From the results in Tables 2A to 2B, in all Examples 1 to 8 and 10, the coating layer was formed of each of the coating agents 1 to 8 and 10 in which the tannic acid derivatives in which an alkyl group having 1, 6, or 18 carbon atoms was substituted was contained in a vinyl chloride-vinyl acetate copolymer resin, a polyester resin, an acrylic resin, or a urethane resin, and the antibacterial activity value was 2 or more. This demonstrates that the proliferation of bacteria on the surface of the coating layer is suppressed and sufficient antibacterial properties are achieved.

In Example 9, the coating layer was formed of the sealing coating agent 1 in which the tannic acid derivative in which an alkyl group having 18 carbon atoms was substituted was contained in an acrylic resin, and the antibacterial activity value was 2 or more. This demonstrates that the proliferation of bacteria on the surface of the coating layer formed of the sealing coating agent is suppressed and sufficient antibacterial properties are achieved.

In Example 9, the heat sealing strength was 2 N/15 mm or more. This demonstrates that sufficient sealing properties are achieved. Furthermore, the appearance of the content was not changed 10 days after storage at room temperature, and therefore the safety of the content was confirmed.

From the results in Tables 3A to 3B, in Comparative Examples 1 to 3 and 9, the coating layer was formed of each of the coating agents 9 to 11 and 15 in which the tannic acid that was not alkyl-modified was contained in a vinyl chloride-vinyl acetate copolymer resin, a polyester resin, an acrylic resin, or a urethane resin, the antibacterial activity value was less than 2, and bacteria was proliferated on the surface of the coating layer.

In Comparative Example 4, the coating layer was formed of the sealing coating agent 2 in which the tannic acid that was not alkyl-modified, the antibacterial activity value was less than 2, and bacteria was proliferated on the surface of the coating layer.

In Comparative Examples 5 to 7 and 10, the coating layer was formed of each of the coating agents 12 to 14 and 16 that did not contain tannic acid and contained a vinyl chloride-vinyl acetate copolymer resin, a polyester resin, an acrylic resin, or a urethane resin, the antibacterial activity value was less than 2, and bacteria was proliferated on the surface of the coating layer.

In Comparative Example 8, the coating layer was formed of the sealing coating agent 3 that did not contain tannic acid, the antibacterial activity value was less than 2, and bacteria was proliferated on the surface of the coating layer. Reference Signs List

- 10: laminate
- 10-1: laminate
- 10-2: laminate
- 11: substrate
- 12A: sealing layer
- 12B: sealing layer
- 12C: sealing layer
- 12D: sealing layer (antibacterial sealing layer)
- 12E: sealing layer (antibacterial sealing layer)
- 13: coating layer (antibacterial coating layer)
- 20: packaging body
- 21: outer package
- 22: containment
- 30: container
- 31: container body
- 32: opening
- 33: internal space
- 40: packaging body
- 41: outer package
- 42: containment
- 43: opening
- 50: packaging body
- 51: outer package
- 52: containment
- 60: container
- 61: container body
- 62: opening
- 63: internal space

## Claims

1. A laminate comprising:
a substrate;
a sealing layer disposed on a surface of the substrate; and
a coating layer disposed on a surface of the substrate opposite to the sealing layer, wherein
the coating layer contains
a tannic acid derivative in which at least a part of a plurality of hydroxyl groups is substituted with a linear hydrocarbon group having 1 to 18 carbon atoms, and
at least one type of resin selected from the group consisting of a urethane resin, an acrylic resin, a vinyl chloride-vinyl acetate copolymer resin, a polyester resin, and an olefin resin.

2. The laminate according to claim 1, wherein the coating layer is formed of an organic binder containing the tannic acid derivative and the resin.

3. The laminate according to claim 1 or 2, wherein the coating layer constitutes a decorative layer.

4. The laminate according to claim 3, wherein the decorative layer is formed of a printing layer containing a printing ink.

5. The laminate according to claim 3, wherein the coating layer is a layer coated with a sealing coating agent.

6. The laminate according to claim 1, wherein the sealing layer contains a tannic acid derivative in which at least a part of a plurality of hydroxyl groups is substituted with a linear hydrocarbon group having 1 to 18 carbon atoms.

7. The laminate according to 6, wherein the sealing layer is formed of an organic binder containing the tannic acid derivative and the resin.

8. A packaging body or container comprising:
a container body; and
one or more laminates according to any one of claims 1 to 7 attached to the container body.

9. The packaging body or container according to claim 8, wherein the laminates constitute a lid member of the container body.

10. The packaging body or container according to claim 8, wherein the laminates are attached to an outer surface of the container body.

11. A packaging body or container comprising:
an outer package formed by bonding one or more laminates according to any one of claims 1 to 7; and
a compartment disposed inside the outer package.
